# FASCICULE DE BREVET EUROPEEN

(11) **EP 1 703 100 B1**
(45) Date de publication et mention de la délivrance du brevet: **27.01.2010**
(21) Numéro de dépôt: 06300243.0
(22) Date de dépôt: 17.03.2006
(51) Int. Cl.: F01P 3/18, B62D 25/08

(54) **Véhicule automobile avec un refroidisseur d'air de suralimentation solidaire d'une traverse piéton**
Kraftfahrzeug mit Ladeluftkühler, an einer Fussgängertraverse angebaut
Motor vehicle with supercharger cooler mounted on a pedestrian crossbeam

(30) Priorité: 18.03.2005 FR 0502685
(43) Date de publication de la demande: 20.09.2006
(73) Titulaire: RENAULT S.A.S., 92100 Boulogne Billancourt (FR)
(72) Inventeur: Laudic, Hélène, 78230 Le Pecq (FR); Faugere, Jean Luc, 78140 Velizy (FR)

(56) Documents cités:
- DE-A1- 3 841 536
- DE-A1- 10 337 870
- FR-A- 2 830 229

## Description

### DOMAINE TECHNIQUE AUQUEL SE RAPPORTE L'INVENTION

La présente invention concerne de manière générale les véhicules automobiles.

Elle concerne plus particulièrement un véhicule automobile comprenant un moteur à combustion interne, une traverse piéton et un refroidisseur d'air de suralimentation dudit moteur à combustion interne.

### ARRIERE-PLAN TECHNOLOGIQUE

Généralement, les véhicules automobiles comprennent une traverse piéton et une traverse avant disposée devant le moteur à combustion interne, adaptées à recevoir un bouclier. Ladite traverse piéton est placée sous la traverse avant et a pour rôle, lors d'un éventuel choc avec un piéton, de se déformer plus facilement que la traverse avant afin d'éviter de casser un membre inférieur du piéton.

Afin d'optimiser leur rendement, les moteurs suralimentés à combustion interne utilisent, en admission, des gaz compressés dont la température doit être la moins élevée possible.

Pour cela, il est prévu un refroidisseur d'air de suralimentation qui permet de refroidir ces gaz compressés avant leur injection dans la chambre de combustion, augmentant ainsi la puissance du moteur.

Le refroidisseur d'air de suralimentation utilise principalement le flux d'air frappant l'avant du véhicule afin de refroidir les gaz compressés. Il doit donc être placé à proximité du moteur de manière à présenter une surface frontale frappée par l'air extérieur suffisamment importante pour jouer correctement son rôle d'échangeur de chaleur.

Actuellement, dans les véhicules connus, le refroidisseur d'air de suralimentation peut être agencé de trois manières différentes. Il peut être placé soit au centre de la calandre du véhicule, devant le radiateur principal, recouvrant une partie voire toute la surface frontale du radiateur principal ; soit latéralement devant une roue avant ; soit enfin en deux modules disposés chacun devant une roue avant du véhicule.

Chacune des trois solutions actuelles présente des inconvénients.

Ainsi, lorsque le refroidisseur d'air de suralimentation est placé de manière centrale, il risque, lors d'un choc à faible vitesse, d'endommager le radiateur principal, entraînant une fuite d'eau et engendrant alors une panne immobilisante.

Lorsque le refroidisseur d'air de suralimentation est placé devant une des deux roues avant, sa surface frontale frappée par l'air extérieur montre une superficie trop faible pour alimenter correctement en air refroidi un moteur diesel à grosse cylindrée.

Lorsque le refroidisseur d'air de suralimentation est placé devant les deux roues avant, son architecture en deux modules de refroidissement distincts est difficile à élaborer, à mettre en oeuvre et à mettre au point. Par ailleurs, un tel agencement en deux modules est une source de défaillance sensiblement plus importante.

Enfin lorsque le radiateur est intégré dans une traverse de structure comme cela est décrit dans le document DE 3841536, les vibrations engendrées par le roulement du véhicule automobile peuvent endommager le refroidisseur d'air de suralimentation ou perturber son fonctionnement ,

### OBJET DE L'INVENTION

Afin de remédier aux inconvénients précités de l'état de la technique, la présente invention propose un véhicule automobile dans lequel le refroidisseur d'air de suralimentation est positionné de manière optimisée.

Plus particulièrement, on propose selon l'invention un véhicule automobile tel que défini dans l'introduction, dans lequel il est prévu que le refroidisseur d'air de suralimentation est solidaire de la traverse piéton.

Ainsi, grâce à l'invention, le refroidisseur d'air de suralimentation est positionné très à l'avant du véhicule automobile, suffisamment loin du radiateur, de sorte que lors d'un choc frontal à faible vitesse, celui-ci ne risque pas d'endommager le radiateur, formant même une protection supplémentaire de la partie basse de ce dernier. Les risques d'immobilisation du véhicule automobile sont donc réduits et les frais de réparation diminués. En outre, tel que positionné selon l'invention, le refroidisseur d'air de suralimentation permet également, lors d'un choc à faible vitesse avec un piéton, d'absorber une partie de l'énergie de l'impact, réduisant les risques de cassure d'un membre inférieur du piéton.

Selon une première caractéristique avantageuse du véhicule automobile conforme à l'invention, le refroidisseur d'air de suralimentation et la traverse piéton sont réalisés en aluminium.

Ainsi, ils présentent une capacité de déformation accrue et absorbent donc mieux l'énergie d'impact lors d'un choc, plus particulièrement lors d'un choc à faible vitesse.

Avantageusement, le refroidisseur d'air de suralimentation est situé dans la partie centrale de la traverse piéton.

Selon une caractéristique avantageuse du véhicule automobile conforme à l'invention, le refroidisseur d'air de suralimentation est solidarisé à la traverse piéton de sorte qu'il est positionné en dessous de la traverse avant.

Ainsi, la position du refroidisseur d'air de suralimentation lui permet, en un seul module, d'avoir une surface frontale frappée par l'air extérieur suffisamment importante pour refroidir l'air compressé d'alimentation d'un moteur diesel à grosse cylindrée.

Selon ce premier mode de réalisation, le refroidisseur d'air de suralimentation est fixé de manière démontable sur la traverse piéton au moyen de plots filtrants.

Ainsi, les vibrations engendrées par le roulement du véhicule automobile n'endommagent pas le refroidisseur d'air de suralimentation et ne le perturbent pas dans son fonctionnement.

Avantageusement, selon ce premier mode de réalisation du véhicule automobile conforme à l'invention, la traverse piéton est mécaniquement liée à la structure de véhicule automobile par des systèmes vis-écrous.

Selon un deuxième mode de réalisation du véhicule automobile conforme à l'invention, le refroidisseur d'air de suralimentation est fixé de manière indémontable à la traverse piéton de sorte que l'ensemble forme une pièce monobloc.

Ainsi, le poids et l'encombrement de l'ensemble constitué du refroidisseur d'air de suralimentation et de la traverse piéton sont diminués.

En outre, selon ce deuxième mode de réalisation conforme à l'invention, ladite pièce monobloc est mécaniquement liée à la structure du véhicule automobile au moyen de plots filtrants.

Ici également, les vibrations dues au roulement du véhicule n'endommagent pas la pièce monobloc, en particulier le refroidisseur d'air de suralimentation, et ne le perturbent pas dans son fonctionnement.

### DESCRIPTION DETAILLEE D'UN EXEMPLE DE REALISATION

La description qui va suivre en regard des dessins annexés donnés à titre d'exemples non limitatifs, fera bien comprendre en quoi consiste l'invention et comment elle peut être réalisée.

Sur les dessins annexés:
- la figure 1 est une vue d'ensemble schématique en perspective d'un véhicule automobile selon l'invention ;
- la figure 2 est une vue d'ensemble schématique en perspective de l'architecture avant du véhicule automobile de la figure 1; et
- la figure 3 est une vue d'ensemble schématique en perspective d'une variante de réalisation de l'architecture de la figure 2.

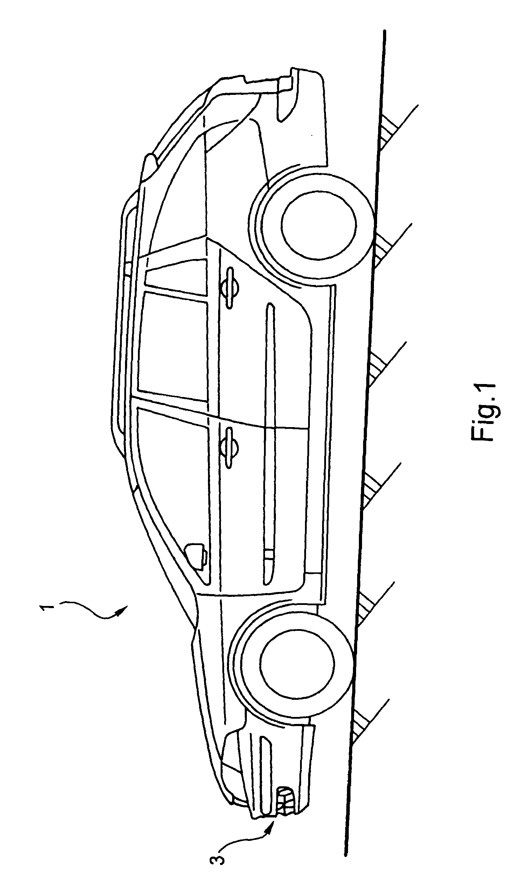

Sur la figure 1, on a représenté schématiquement un véhicule automobile 1 qui comprend un bouclier avant 3. Il est prévu derrière ce bouclier avant 3 des traverses structurelles capables de se déformer pour amortir un éventuel choc à l'avant dudit véhicule automobile 1.

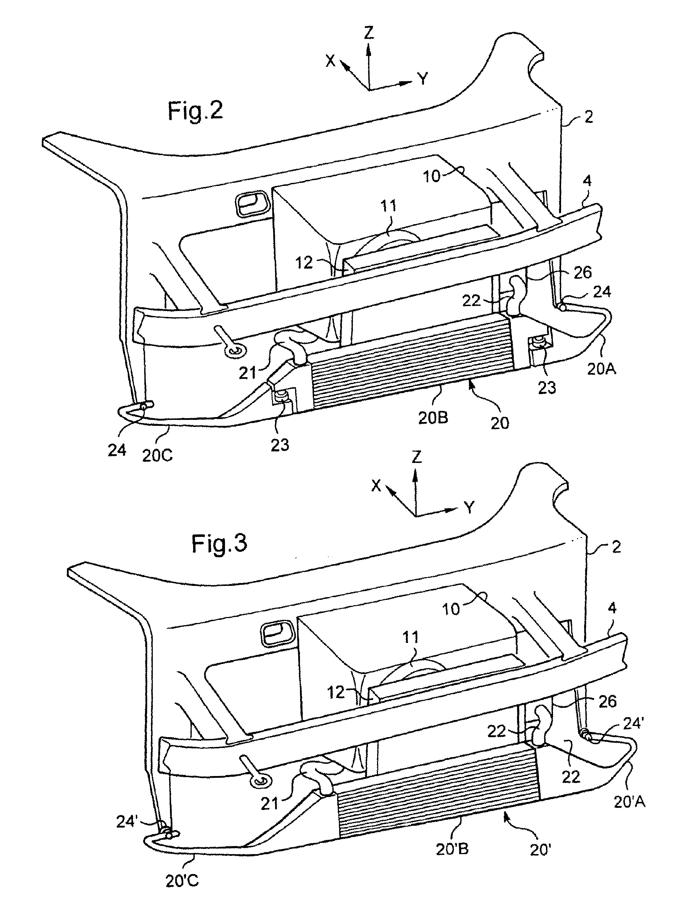

Sur la figure 2, on a représenté plus particulièrement de manière schématique l'architecture avant du véhicule automobile 1. Ce véhicule comporte un moteur à combustion interne 10 fixé à une structure 2.

A l'avant du moteur à combustion interne 10, il est prévu un radiateur à eau 12 et un ventilateur 11 dudit radiateur à eau 12 pour refroidir ledit moteur à combustion interne 10.

L'ensemble constitué du moteur à combustion interne 10, de son radiateur 12 et de son ventilateur 11 est protégé des chocs frontaux par une des traverses structurelles précitées appelée traverse avant 4.

Cette traverse avant 4 s'étend transversalement par rapport à l'axe X du véhicule automobile 1 selon l'axe Y. Elle est plus particulièrement positionnée dans la région haute couverte par le bouclier 3, légèrement en avant du radiateur 12. En outre, ladite traverse avant 4 s'étend pratiquement sur toute la largeur du véhicule automobile 1.

Par ailleurs, il est prévu une autre traverse structurelle appelée traverse piéton 20, qui vient renforcer l'avant du véhicule automobile 1.

Cette traverse piéton 20 s'étend parallèlement à la traverse avant 4, sensiblement à l'aplomb de celle-ci, dans la région basse couverte par le bouclier 3. Ladite traverse piéton 20 s'étend elle aussi sur pratiquement toute la largeur du véhicule automobile 1.

La traverse avant 4 a pour rôle d'amortir les chocs frontaux importants tandis que la traverse piéton 20 a plus particulièrement pour rôle d'amortir les chocs frontaux à faible vitesse intervenant avec un piéton. Elle est ainsi adaptée à se déformer facilement afin d'éviter de casser un membre inférieur dudit piéton.

Selon une caractéristique particulière du véhicule automobile 1, le moteur à combustion interne 10 utilise en admission de l'air compressé. Cet air compressé provient de l'extérieur, il est compressé par un turbocompresseur 26 puis circule dans une conduite d'admission 22 d'un refroidisseur d'air de suralimentation 20B. A la sortie de ce refroidisseur d'air de suralimentation 20B, l'air est amené jusqu'au moteur à combustion interne 10 par une conduite d'échappement 21.

Selon une caractéristique essentielle et avantageuse du véhicule automobile 1 selon l'invention, le refroidisseur d'air de suralimentation 20B est solidaire de la traverse piéton 20.

Comme le montrent plus particulièrement les figures 2 et 3, le refroidisseur d'air de suralimentation 20B est situé dans la partie centrale de la traverse piéton 20. La traverse piéton 20 est ainsi constitué du refroidisseur d'air de suralimentation 20B et de deux raccords 20A,20C s'étendant de part et d'autre du refroidisseur de suralimentation 20B.

Le refroidisseur d'air de suralimentation 20B est ainsi placé à l'avant du véhicule automobile 1 dans la région basse couverte par le bouclier 3. Plus particulièrement, il s'étend parallèlement à la traverse avant 4. Il est placé en dessous et au droit de cette traverse avant 4.

Ce positionnement sensiblement en avant du radiateur 12 permet au refroidisseur d'air de suralimentation 20B, lors d'un choc frontal, non seulement de ne pas endommager le radiateur 12 mais aussi de lui assurer une protection supplémentaire sur sa partie basse.

Avantageusement, le refroidisseur d'air de suralimentation 20B peut présenter une forme très allongée et courbée afin d'avoir les mêmes caractéristiques mécaniques qu'une traverse piéton classique et d'épouser la forme générale de la partie basse du bouclier 3. Cette forme doit en outre permettre au refroidisseur d'air de suralimentation 20B de conserver ses propriétés thermiques d'échangeur de chaleur.

Par ailleurs, son positionnement lui permet d'exposer une surface frappée par l'air extérieur suffisamment importante pour refroidir correctement l'air compressé. Enfin, cette position sur la traverse piéton 20 lui permet de participer à l'absorption de l'énergie produite par un choc à faible vitesse contre un piéton.

Préférentiellement, le refroidisseur d'air de suralimentation 20B et la traverse piéton 20 sont tous deux réalisés en aluminium afin d'augmenter leur capacité de déformation et donc d'absorption de l'énergie produite par un choc.

Selon le mode de réalisation représenté sur la figure 2, le refroidisseur d'air de suralimentation 20B est fixé de manière démontable aux deux raccords 20A,20C de la traverse piéton 20 au moyen de plots filtrants 23.

Le nombre de plots filtrants 23 utilisés pour fixer le refroidisseur d'air de suralimentation 20B aux deux raccords 20A,20C de la traverse piéton 20 peut varier, on utilise au minimum deux plots filtrants 23.

Par ailleurs, chacune des extrémités de la traverse piéton 25 est mécaniquement liée à la structure 2 du véhicule automobile 1 au moyen de systèmes vis-écrous 24.

Ainsi, le refroidisseur d'air de suralimentation 20B encaisse lors du roulement du véhicule automobile 1 moins de vibrations que la traverse piéton 20. Par ailleurs le lien mécanique créé par les plots filtrants 23 entre ladite traverse piéton 20 et le refroidisseur d'air de suralimentation 20B permet au refroidisseur d'air de suralimentation 20B d'emmagasiner une partie de l'énergie produite par un éventuel choc avant.

Sur la figure 3, on a représenté une variante de réalisation du véhicule automobile 1 selon laquelle le refroidisseur d'air de suralimentation 20'B est fixé de manière indémontable, par exemple soudé, aux deux raccords latéraux 20'A,20'C de la traverse piéton 20', de sorte que l'ensemble forme une pièce monobloc 20'.

Selon cette variante de réalisation du véhicule automobile 1, le refroidisseur d'air de suralimentation 20'B s'étend au centre de la pièce monobloc 20'.

Cette pièce monobloc 20' s'étend pratiquement sur toute la largeur du véhicule automobile 1.

Par ailleurs, dans ce mode de réalisation du véhicule automobile 1 conforme à l'invention, la pièce monobloc 20' est fixée à la structure 2 du véhicule automobile 1 au moyen de plots filtrants 24'. Au moins un plot filtrant est ainsi disposé à chaque extrémité de la pièce monobloc 20', chacun des plots filtrants 24' étant solidaire de la structure 2 du véhicule automobile 1.

Avantageusement, la fixation au moyen de plots filtrants 24' permet d'amortir les vibrations dues au roulement du véhicule, évitant ainsi tout risque éventuel de détérioration du refroidisseur d'air de suralimentation 20'B ou de fragilisation de cette fixation.

## Revendications

1. Véhicule automobile (1) comprenant un moteur à combustion interne (10), une traverse piéton (20;20') et un refroidisseur d'air de suralimentation (20B;20'B) dudit moteur à combustion interne (10), **caractérisé en ce que** la traverse piéton (20;20') est constituée dudit refroidisseur d'air de suralimentation qui est fixé de manière démontable sur deux raccords (20A, 20C) de la traverse piéton (20) au moyen de plots filtrants (23).

2. Véhicule automobile (1) selon la revendication 1, **caractérisé en ce que** le refroidisseur d'air de suralimentation (20B;20'B) et les raccords (20A, 20C) de la traverse piéton (20;20') sont réalisés en aluminium.

3. Véhicule automobile (1) selon l'une des revendications 1 ou 2, comprenant une traverse avant (4), **caractérisé en ce que** le refroidisseur d'air de suralimentation (20B;20'B) est positionné en dessous de la traverse avant (4).

4. Véhicule automobile (1) selon une des revendications précédentes, **caractérisé en ce que** la traverse piéton (20) est mécaniquement liée à la structure (2) du véhicule automobile (1) par des systèmes vis-écrous (24).

5. Véhicule automobile (1) selon une des revendications précédente, **caractérisé en ce que** le refroidisseur d'air de suralimentation (20B;20'B) est situé dans la partie centrale de la traverse piéton (20;20').

## Claims

1. Motor vehicle (1) comprising an internal combustion engine (10), a pedestrian cross-member (20; 20') and an intercooler (20B; 20'B) for the supercharged air of the said internal combustion engine (10), **characterized in that** the pedestrian cross-member (20; 20') consists of the said intercooler which is attached removeably to two connectors (20A, 20C) of the pedestrian cross-member (20) by means of energy-absorbing pads (23).

2. Motor vehicle (1) according to Claim 1, **characterized in that** the intercooler (20B; 20'B) and the connectors (20A, 20C) of the pedestrian cross-member (20; 20') are made of aluminium.

3. Motor vehicle (1) according to one of Claims 1 and 2, comprising a front cross-member (4), **characterized in that** the intercooler (20B; 20'B) is positioned below the front cross-member (4).

4. Motor vehicle (1) according to one of the preceding claims, **characterized in that** the pedestrian cross-member (20) is mechanically attached to the structure (2) of the motor vehicle (1) by screw-nut systems (24).

5. Motor vehicle (1) according to one of the preceding claims, **characterized in that** the intercooler (20B; 20'B) is situated in the central part of the pedestrian cross-member (20; 20').

## Patentansprüche

1. Kraftfahrzeug (1) mit einem Verbrennungsmotor (10), einem Fußgängerquerträger (20; 20') und einem Ladeluftkühler (20B; 20'B) des Verbrennungsmotors (10), **dadurch gekennzeichnet, dass** der Fußgängerquerträger (20; 20') aus dem Ladeluftkühler besteht, der mittels Filterstutzen (23) abmontierbar an zwei Verbindungsteilen (20A, 20C) des Fußgängerquerträgers (20) befestigt ist.

2. Kraftfahrzeug (1) nach Anspruch 1, **dadurch gekennzeichnet, dass** der Ladeluftkühler (20B; 20'B) und die Verbindungsteile (20A, 20C) des Fußgängerquerträgers (20; 20') aus Aluminium hergestellt sind.

3. Kraftfahrzeug (1) nach Anspruch 1 oder 2, das einen vorderen Querträger (4) umfasst, **dadurch gekennzeichnet, dass** der Ladeluftkühler (20B; 20'B) unter dem vorderen Querträger (4) positioniert ist.

4. Kraftfahrzeug (1) nach einem der vorhergehenden Ansprüche, **dadurch gekennzeichnet, dass** der Fußgängerquerträger (20) durch Schraub-Mutter-Systeme (24) mechanisch mit der Struktur (2) des Kraftfahrzeugs (1) verbunden ist.

5. Kraftfahrzeug (1) nach einem der vorhergehenden Ansprüche, **dadurch gekennzeichnet, dass** der Ladeluftkühler (20B; 20'B) im mittleren Teil des Fußgängerquerträgers (20; 20') angeordnet ist.
